# FASCICULE DE BREVET EUROPEEN

(11) **EP 2 536 863 B1**
(45) Date de publication et mention de la délivrance du brevet: **11.07.2018**
(21) Numéro de dépôt: 11712924.7
(22) Date de dépôt: 16.02.2011
(51) Int. Cl.: C04B 41/81, C04B 41/90, C04B 41/00, C04B 41/52, C22C 47/04, C22C 49/11, C22C 49/14, C04B 41/88, C04B 41/45, C23C 2/38, C04B 41/51, C23C 2/00

(54) **DISPOSITIF POUR L'OBTENTION DE FIBRES CERAMIQUES ENDUITES PAR VOIE LIQUIDE D'UNE GAINE METALLIQUE EPAISSE**
VORRICHTUNG ZUR GEWINNUNG VON IN EINEM FLÜSSIGVERFAHREN MIT EINER DICKEN METALLHÜLLE ÜBERZOGENEN KERAMIKFASERN
DEVICE FOR OBTAINING CERAMIC FIBRES COATED BY A LIQUID PROCESS WITH A THICK METAL SHEATH

(30) Priorité: 16.02.2010 FR 1051092
(43) Date de publication de la demande: 26.12.2012
(73) Titulaire: Safran Aircraft Engines, 75015 Paris (FR)
(72) Inventeur: FRANCHET, Jean-Michel, Patrick, Maurice, F-75018 Paris (FR); KLEIN, Gilles, Charles, Casimir, F-95540 Mery Sur Oise (FR); SANCHEZ, Gérald, F-74230 Dingy St Clair (FR)
(74) Mandataire: Gevers & Orès
(86) Numéro de dépôt international: PCT/FR2011/050332
(87) Numéro de publication internationale: WO 2011/101596

(56) Documents cités:
- EP-A1- 1 995 342
- DE-A1- 3 718 178

## Description

Le domaine de la présente invention est celui de l'enduction de fibres par voie liquide, et porte en particulier, mais non exclusivement, sur un dispositif et sur un procédé permettant d'obtenir un revêtement épais et régulier de métal sur une fibre, dans des conditions industrielles de production.

Dans le domaine de l'aéronautique, notamment, un objectif constant est l'optimisation de la résistance des pièces pour une masse et un encombrement minimaux. C'est ainsi que certaines pièces peuvent désormais comporter un insert en matériau composite à matrice métallique. Un tel matériau composite comporte une matrice d'alliage métallique, par exemple d'alliage de titane, dans laquelle s'étendent des fibres, par exemple des fibres céramiques de carbure de silicium. De telles fibres présentent une résistance en traction bien supérieure à celle du titane (typiquement 4000 MPa contre 1000 MPa) et une rigidité typiquement trois fois plus élevée. Ce sont donc les fibres qui reprennent les efforts, la matrice d'alliage métallique assurant le transfert de charges entre les fibres, une fonction de liant avec le reste de la pièce, ainsi qu'une fonction de protection et de séparation des fibres qui ne doivent pas entrer en contact les unes avec les autres. En outre, les fibres céramiques sont résistantes, mais fragiles et doivent nécessairement être protégées par du métal.

Ces matériaux composites peuvent être utilisés dans la fabrication de disques, d'arbres, de corps de vérins, de carters, d'entretoises, comme renforts de pièces monolithiques telles des aubes, etc. Ils peuvent également trouver une application dans d'autres domaines où un champ de forces volumiques s'applique à une pièce, par exemple une enveloppe de pression telle qu'un réservoir de fluide sous pression.

Afin d'obtenir un tel insert de matériau composite, on forme préalablement des fils dits "fils enduits", comprenant une armature formée d'une fibre en céramique, enduite d'une gaine métallique. Le revêtement de métal donne au fil une plus grande raideur mais une meilleure ténacité, utile pour sa manipulation. La fabrication des fils de matériau composite, ou fils enduits, peut être effectuée de diverses manières, par exemple par dépôt en phase vapeur de métal sur la fibre sous un champ électrique, par électrophorèse à partir de poudre métallique ou encore par enduction des fibres par leur trempe dans un bain de métal liquide.

Un procédé d'enduction de fibres, par trempe dans un bain de métal en fusion, est présenté dans la demande de brevet EP 1995342 ou le brevet EP 0931846, déposés au nom de la demanderesse. Le brevet EP 0931846 décrit un procédé d'enduction métallique de fibres par voie liquide, ce procédé étant plus particulièrement, mais non exclusivement, destiné à l'enduction des fibres par des métaux et alliages métalliques présentant une température de fusion élevée. Dans ce procédé le métal liquide est maintenu en lévitation dans un creuset adapté, à une température appropriée, de manière à supprimer, au moins partiellement, le contact avec les parois de ce dernier. La lévitation est obtenue grâce à des moyens électromagnétiques entourant le creuset. La fibre de céramique, maintenue tendue par des moyens de préemption, est tirée au travers du bain de métal. Un dispositif permet, à volonté, de faire passer la fibre à travers le creuset pour qu'il se charge en métal en traversant le bain de métal ou de le lui faire contourner. La vitesse de passage de la fibre dans le bain métallique est fixée en fonction de l'épaisseur désirée de métal sur la fibre. Compte tenu des caractéristiques viscoélastiques du titane en fusion, la vitesse donnant la plus grande épaisseur de titane se situe aux alentours de 3 m/s.

Un des problèmes qui se pose dans ces procédés d'enduction à grande vitesse de fibres céramique est lié à la nécessité de refroidir rapidement le fil enduit après son passage dans la boule de métal liquide. Dans l'art antérieur, le refroidissement est réalisé par une colonne dans laquelle passe le fil et qui dispose d'une multitude de buses de refroidissement qui éjectent de l'air en direction du fil à sa sortie de la boule de métal. Il est connu qu'il faut refroidir le fil à une température d'environ 500°C pour obtenir une solidification franche. Dans le cas d'une fibre en carbure de silicium de 140 microns qui sort d'un bain de titane liquide à 1700°C et qui circule à la vitesse de 3m/sec, il faut typiquement une colonne d'un mètre de hauteur pour obtenir la solidification désirée en éjectant de l'air sous une pression de 2 bars.

Les inconvénients associés à ce procédé sont, tout d'abord un encombrement important des installations, mais ensuite, et surtout, une qualité médiocre du fil, du fait de l'apparition d'instabilités sur le diamètre du fil gainé, ce qui donne au revêtement métallique un aspect ondulé. Ces instabilités longitudinales sont d'autant plus marquées que l'épaisseur relative de la gaine par rapport à la fibre est importante. Une des conséquences est un risque de rupture du fil enduit, au niveau des restrictions de son diamètre, lors de son enroulement sur des tambours de stockage après l'enduction.

Pour éviter cela l'homme du métier se limite actuellement à des taux de fibres relativement élevés, le taux de fibres se définissant comme le rapport du diamètre de la fibre initiale au diamètre du fil enduit. Or il est souhaitable de pouvoir réaliser des fils ayant une grosse épaisseur relative de gaine, c'est-à-dire un taux de fibres faible, et en tout état de cause inférieur aux 35% indiqués dans la demande de brevet EP 0931846. L'obtention de fils à faible taux se heurte au phénomène d'instabilité longitudinale de l'épaisseur de la gaine qui est causée par le cisaillement des vitesses au sein du ménisque de gaine liquide qui est entraînée par la fibre et par la tendance naturelle d'un liquide à prendre une position dans laquelle sa tension superficielle est minimale. La forme idéale pour un liquide libre de se déformer étant une sphère, la gaine a tendance à se déformer pour prendre une forme proche de celle d'un chapelet de gouttelettes portées par la fibre. Cette instabilité longitudinale de la gaine est d'autant plus prononcée que le taux de fibres est bas et que le temps mis pour le refroidissement est long.

La présente invention a pour but de remédier à ces inconvénients en proposant un procédé et un dispositif qui élimine au moins certains des inconvénients de l'art antérieur et, en particulier, qui permette de solidifier la gaine liquide avant qu'apparaissent les phénomènes d'instabilité longitudinale.

A cet effet, l'invention a pour objet un dispositif d'enduction métallique de fibres par voie liquide, comportant un creuset contenant un bain de métal liquide à travers lequel est tirée une fibre pour être enduite par ce dernier, ledit dispositif comportant en outre un système de refroidissement positionné en aval dudit bain de métal pour solidifier la gaine métallique créée autour de ladite fibre par capillarité caractérisé en ce que ledit système de refroidissement comporte au moins une buse d'éjection d'un gaz comprimé conformée pour éjecter le gaz dans une direction faisant avec la direction d'avancement du fil enduit un angle inférieur à 30° et positionnée à une distance du bain de métal liquide inférieure à 5 mm, et en ce que le système est dimensionné pour solidifier le métal à la périphérie d'un fil enduit sur une course d'une longueur inférieure ou égale à 200 mm.

Le gaz comprimé produit un double effet, d'une part avec la ventilation qui accélère le refroidissement par convection, et d'autre part avec le refroidissement généré par sa détente. Le refroidissement sur une longueur inférieure à 200 mm permet de solidifier la gaine de métal formant l'enduction de la fibre avant que cette gaine ne se déforme et fasse apparaître des ondulations de son diamètre. Cette faible longueur est essentielle lorsqu'on cherche à produire du fil à faible taux de fibres, c'est à dire avec une grosse épaisseur de gaine par rapport au diamètre de la fibre, sans avoir à réduire la vitesse d'avancement de la fibre, qui peut rester typiquement de l'ordre de 3m/s. Une orientation avec un angle inférieur à 30° évite que le gaz ne revienne vers la surface du métal en fusion et génère, par là, le refroidissement du métal en fusion ainsi que de possibles perturbations sur ladite surface. Et en effectuant le refroidissement au plus près du bain de métal et du ménisque de métal liquide attaché à la fibre et en solidifiant la gaine le plus tôt possible, on évite les déformations par ondulations de la gaine liquide.

Dans un mode particulier de réalisation le système de refroidissement comporte deux séries de tubes portant chacun au moins une buse, placés en face à face de part et d'autre du fil à sa sortie du métal liquide.

Préférentiellement la ou les buses ont la forme d'une fente pratiquée dans le tube et s'étendant perpendiculairement à la direction d'avancement du fil enduit.

Dans un mode particulier de réalisation le dispositif décrit ci-dessus comprend en outre un galet mobile apte à déplacer la fibre pour qu'elle traverse ou non le bain de métal liquide, et le système de refroidissement est positionné le long du fil enduit, entre ledit bain de métal liquide et ledit galet mobile. Le système de refroidissement du dispositif revendiqué, étant de faible longueur, peut se positionner tout près du métal liquide et ne pas interférer avec les systèmes de galets mobiles existants.

Préférentiellement, dans ce mode, le système de refroidissement comporte deux séries de tubes portant chacun au moins une buse d'éjection d'un gaz comprimé, lesdites séries étant positionnées de part et d'autre du fil à sa sortie du métal liquide, le long de deux plans parallèles entre eux et parallèles au fil enduit, de sorte que le fil enduit puisse se mouvoir entre ces plans, sous l'action dudit galet mobile, pour entrer ou sortir dudit bain de métal liquide. Le dispositif revendiqué est ainsi compatible d'un dispositif d'enduction existant, tel que celui décrit dans le brevet EP 0931846.

L'invention porte encore sur un procédé de production d'un fil enduit à un taux de fibres, défini comme le rapport du diamètre de la fibre initiale au diamètre du fil enduit, inférieur à 35%, à partir d'une fibre tirée à travers un bain de métal liquide contenu dans un creuset puis refroidie en aval dudit bain de métal pour solidifier la gaine métallique créée par capillarité autour de ladite fibre caractérisé par le fait qu'il comprend le passage dudit fil devant une buse d'éjection d'un gaz comprimé conformée pour éjecter le gaz dans une direction faisant avec la direction d'avancement du fil enduit un angle inférieur à 30° et positionnée à une distance du bain de métal liquide inférieure à 5 mm, la vitesse d'avancement de la fibre étant supérieure à 2 m/s et la pression du gaz comprimé étant supérieure ou égale à 50 bars, de sorte que le métal à la périphérie du fil enduit est solidifié sur une course d'une longueur inférieure ou égale à 200 mm.

L'invention porte enfin sur un fil enduit constitué d'une fibre céramique enduite d'une gaine métallique, présentant un taux de fibres, défini comme le rapport du diamètre de la fibre initiale au diamètre du fil enduit, inférieur à 35% selon le procédé de production tel que décrit ci-dessus. Une vitesse élevée, typiquement supérieure à 2 m/s et de façon optimale voisine de 3 m/s, permet une production à une cadence industrielle, tout en obtenant un taux de fibres faible, typiquement inférieur à 35 %.

Dans un mode particulier de réalisation le procédé ci-dessus est appliqué à la production d'un fil enduit constitué par le passage d'une fibre céramique à travers un bain de titane liquide.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'un dispositif d'enduction métallique d'une fibre selon l'art antérieur ;
- la figure 2 est une vue en coupe d'une fibre céramique après l'application d'une couche métallique par un procédé d'enduction par voie liquide ;
- la figure 3 est une vue schématique d'un dispositif d'enduction d'une fibre céramique par voie liquide ;
- les figures 4 et 5 sont respectivement des vues de face et de profil d'un dispositif d'enduction d'une fibre céramique par une couche métallique, selon un mode de réalisation de l'invention ;
- la figure 6 est une vue en perspective d'un sous-ensemble de refroidissement d'un fil enduit dans un dispositif d'enduction par une couche métallique selon un mode de réalisation de l'invention ;
- la figure 7 est une vue de détail, en coupe, d'un sous-ensemble de refroidissement d'un fil enduit dans un dispositif d'enduction selon un mode de réalisation de l'invention.

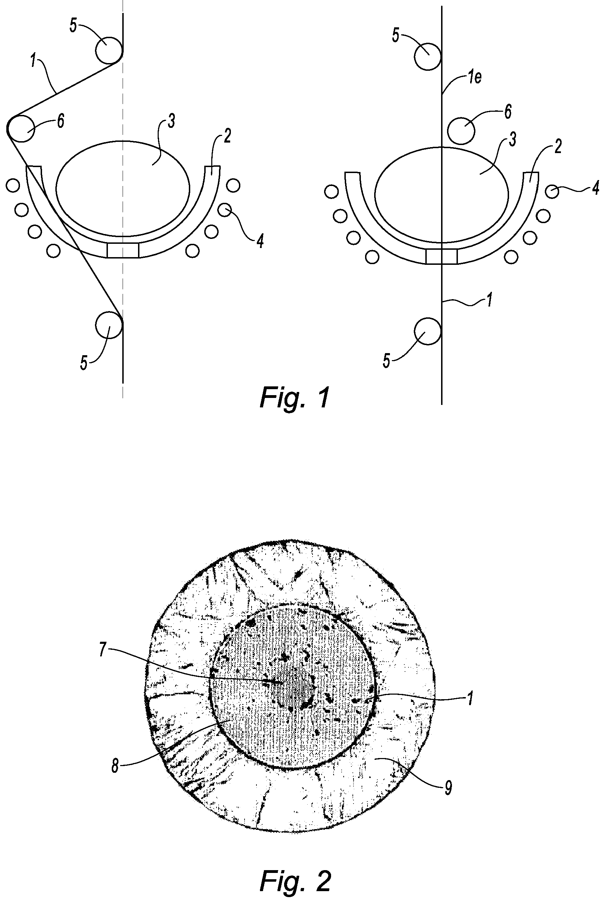

En se référant à la figure 1, on voit, dans deux conditions de fonctionnement, un dispositif d'enduction métallique par voie liquide d'une fibre céramique, tel que décrit dans la demande de brevet EP 0931846 déposé par la demanderesse. On y voit une fibre 1 passant à travers un creuset 2 contenant une boule de titane liquide 3. La boule de titane 3 est maintenue en lévitation dans le creuset 2 par un champ magnétique (non représenté) et chauffé par un four à induction 4. La fibre 1 est guidée, à la fois, par des galets 5 et par un galet mobile 6 qui a pour fonction, soit de pousser la fibre 1 hors de la boule métallique 3 et de l'empêcher de se charger en métal, soit de la laisser traverser ladite boule et se charger en métal par enduction.

La figure 2 montre un fil enduit le réalisé par passage au travers d'un bain de métal liquide, l'âme du fil étant constituée par une fibre 1, elle même étant constituée par un fil de carbone 7 recouvert d'une couche céramique 8 telle que du carbure de silicium. La fibre 1 est recouverte d'une gaine 9 en un métal tel que du titane, après réalisation d'une opération d'enduction par voie liquide.

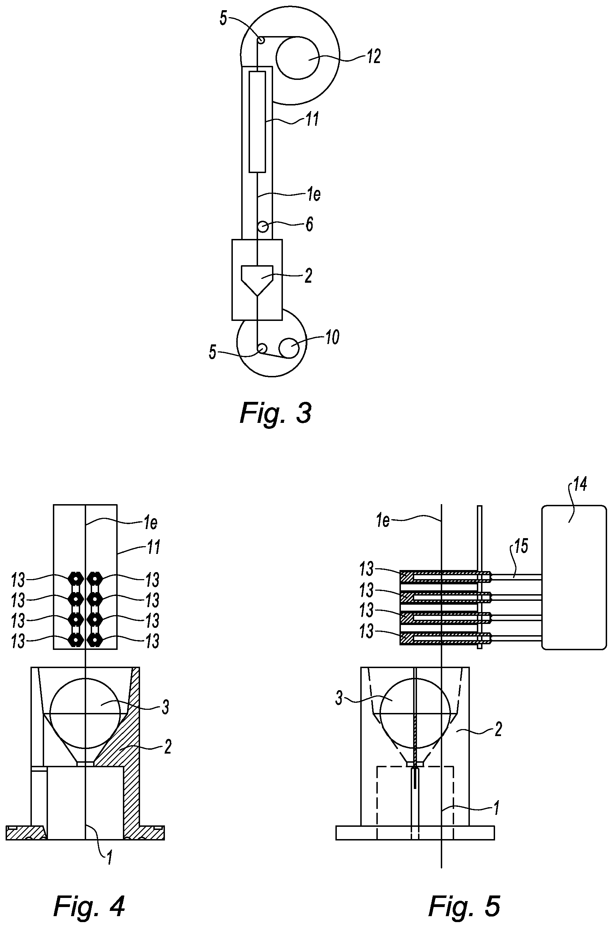

La figure 3 montre schématiquement un dispositif d'enduction d'une fibre par voie liquide, la fibre 1 provenant d'un premier tambour 10, puis passant dans un creuset 2 rempli d'un métal en fusion et s'y chargeant d'une gaine métallique liquide. Le fil enduit le circule ensuite dans un sous-ensemble de refroidissement 11 avant de s'enrouler sur un second tambour de stockage 12. Le métal reste globalement liquide depuis la sortie du bain dans le creuset 2 jusqu'à son entrée dans le sous-ensemble de refroidissement 11.

En se référant maintenant aux figures 4 et 5 on voit un dispositif d'enduction selon l'invention dans lequel le refroidisseur 11 est constitué par deux séries de tubes 13 placés en face à face, de part et d'autre du fil enduit le à sa sortie du métal en fusion. Comme on peut le voir sur la figure 5 les tubes 13 sont connectés à un réservoir de gaz comprimé 14 par l'intermédiaire de canalisations de raccordement 15.

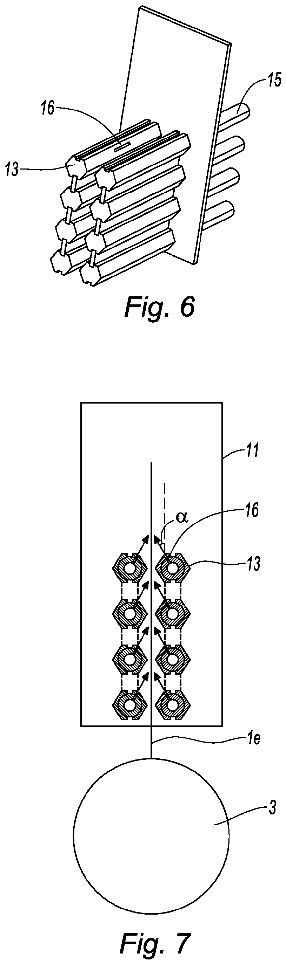

La figure 6 montre la disposition relative des deux séries de tubes 13 et l'espace laissé libre entre elles, par lequel passe le fil enduit le. Les tubes ont, en coupe, une forme sensiblement hexagonale et comportent une buse 16 d'éjection d'un gaz, sur leur face oblique qui est orientée vers la fibre, du côté aval, c'est-à-dire du côté situé après le passage du fil le au niveau du tube 13 correspondant. Cette buse a la forme d'une fente étroite, orientée selon l'axe du tube 13 et elle s'étend sur une longueur suffisante pour que le jet de gaz qui en sort touche de façon certaine la fibre à refroidir 1. Elle est en outre relativement fine pour que la distribution du champ de vitesses de l'air soit assez étroite et qu'ainsi le jet qui en sort soit sensiblement plan et ait une vitesse élevée.

Sur la figure 7 est représentée, en coupe, la disposition de la fente 16 à l'intérieur du tube 13. Cette fente est orientée selon une direction faisant par rapport à la direction de défilement de la fibre 1 un angle α, dont la valeur est avantageusement inférieure à 30°. Le jet de gaz comprimé qui est éjecté à travers la fente 16, atteint le fil enduit le postérieurement au passage de celui-ci devant le tube 13 correspondant.

On va maintenant décrire le fonctionnement du dispositif d'enduction selon le mode de réalisation illustré sur les figures.

La fibre 1 est réalisée antérieurement à son enduction métallique par un procédé connu de l'homme du métier qui aboutit à la création d'une gangue de céramique 8 autour d'un fil en carbone 7. Cette fibre 1 est stockée par enroulement sur un premier tambour 10 duquel il a vocation à se dérouler pour entrer dans un dispositif d'enduction comme celui illustré sur la figure 1. De façon préférentielle la fibre 1 se déplace selon une direction verticale, du bas vers le haut, et traverse le métal en fusion au niveau d'une surface sensiblement horizontale. Son cheminement au sein du dispositif d'enduction consiste, en sortie du premier tambour 10 à passer sur des galets 5 qui assurent sa tension et qui l'orientent pour son passage au travers du creuset 2. Un galet mobile 6 le dévie pour qu'il contourne le centre du creuset 2 et ne vienne pas, dans un premier temps, interférer avec le métal situé dans le creuset.

Le titane contenu dans le creuset 2 est amené à une température proche de 1700° par le four à induction 4 pour passer à l'état liquide. Il est par ailleurs maintenu en lévitation dans le creuset 2 par un champ magnétique de façon qu'il n'ait pas, ou très peu, de contact avec ses parois. Dans cette position le métal fondu tend, sous l'action de la tension superficielle qui s'exerce à sa périphérie, à prendre une forme sensiblement en boule pour minimiser sa surface extérieure. Du fait de la position initiale donnée au galet mobile 6 la fibre 1 est entièrement située à l'extérieur de cette boule de métal en fusion. Le relâchement du galet mobile par l'opérateur, associé à la mis en mouvement de la fibre 1, entraîne le passage de celle-ci dans la boule de métal liquide 3 et le début de l'opération d'enduction de la fibre. La vitesse d'avancement de la fibre et son positionnement latéral dans la boule en fusion sont réglés de façon à obtenir l'épaisseur voulue de métal qui s'attache à la fibre et ainsi le taux de fibres souhaité pour le fil le après l'enduction.

Comme l'on cherche un taux de fibres particulièrement faible, (typiquement inférieur à 35%) le ménisque de métal en fusion qui s'attache à la fibre est, par comparaison avec le diamètre de la fibre, relativement large. Il s'ensuit une distribution des vitesses à l'intérieur de ce ménisque qui présente un fort effet de cisaillement. Toutes les conditions sont donc réunies pour qu'apparaissent des instabilités longitudinales sur le diamètre du fil enduit le. Mais ce phénomène n'apparait qu'après une certaine hauteur d'extraction de la fibre 1 du métal en fusion 3. L'invention propose en conséquence de solidifier la gaine métallique 9 au plus tôt, dès la sortie du bain de métal et de profiter ainsi de la stabilité encore présente juste au-dessus du ménisque.

Pour cela elle place le refroidisseur 11 le plus prêt possible de la surface du métal et opère un refroidissement très puissant pour solidifier la gaine dès sa sortie du métal liquide et surtout avant que n'apparaissent les instabilités longitudinales. Un tel objectif est atteint si le refroidissement est considéré comme terminé, c'est-à-dire si la température du métal sur sa partie périphérique est amenée à une valeur inférieure à 500°C, au bout d'une longueur qui ne dépasse pas 200 mm.

Pour réaliser cet objectif le dispositif fait passer la fibre 1 entre les tubes 13 à la vitesse d'environ 3m/s, ce qui correspond à la vitesse qui donne le plus grand diamètre de gaine métallique pour un diamètre de fibre donné et permet ainsi d'obtenir, en choisissant des fibres 1 de très petit diamètre, des taux de fibres inférieur à 35%.

Les buses 16 éjectent de l'air sur le fil enduit le, dès sa sortie du bain de métal, selon une direction orientée vers le haut pour éviter qu'une partie du flux de gaz, en revenant vers le bas, d'une part, ne perturbe la thermique du métal en fusion en le refroidissant et, d'autre part, ne perturbe la surface de ce métal en créant des oscillations gênantes. Pour éviter cela la direction dans laquelle est orienté le flux gazeux ne doit pas s'écarter de la direction d'avancement du fil le d'un angle supérieur à 30°.

En second lieu il importe de refroidir de façon extrêmement rapide le métal attaché à la fibre 1 et pour cela de disposer d'un système de refroidissement extrêmement performant. Celui proposé par l'invention porte sur l'envoi d'un jet de gaz comprimé à forte pression, comprise entre 50 à 200 bars, à proximité immédiate du fil le à refroidir, c'est à dire à des distances comprises entre 2 et 5 mm et préférentiellement de l'ordre de 2 à 3 mm. La haute pression permet tout d'abord une ventilation importante et l'évacuation des calories mais aussi provoque un refroidissement important dû à la détente du gaz, de sa pression de stockage vers la pression atmosphérique. Ce double effet provoque le refroidissement intense recherché.

La forme en fente très étroite donnée à la buse 16 participe également à la génération d'un bon refroidissement. La faible section de cette buse, associée à la forte pression du gaz de refroidissement, entraîne une vitesse importante du gaz en sortie de la buse 16 en raison du fort ΔP existant entre l'intérieur du tube 13 et l'extérieur. La forte vitesse améliore le phénomène de convection et l'évacuation des calories.

Il convient de noter que la disposition des tubes 13, qui ne sont fixés sur une cloison que d'un seul côté, permet l'entrée et la sortie de la fibre 1 dans le système de creuset 2, en réponse à la position donnée au galet mobile 6. Le fait de mettre le refroidisseur 11 au plus près du bain de métal 3 n'empêche donc pas d'utiliser un dispositif d'enduction du type de celui de l'art antérieur décrit dans le brevet EP 0931846. La hauteur limitée du refroidisseur 11, puisqu'il ne dépasse généralement pas 200 mm, rend par ailleurs son intégration dans le dispositif relativement aisée.

Enfin pour une meilleure capacité de refroidissement il est préférable de positionner le réservoir de gaz comprimé 14 à proximité immédiate des tubes 13, afin d'améliorer le différentiel de pression entre l'amont et l'aval de la fente 16 en évitant les pertes de pression qui se produisent le long des canalisations de raccordement 15.

Avec un tel dispositif on arrive à baisser la température du fil enduit le, au niveau de sa périphérie, aux alentours de 500°c, c'est-à-dire à une température où le métal s'est solidifié, dès une distance d'environ 100 mm après la sortie du bain de métal 3. Avec des pressions dans le réservoir de gaz 14 comprises entre 50 et 200 bars on arrive à solidifier la gaine de métal 9, au moins sur sa surface périphérique, après une course variant de 100 à 200 mm. Le phénomène d'instabilité longitudinale de la gaine de métal 9 n'a pas le temps de se produire de façon notable sur des hauteurs de refroidissement aussi faibles. On peut ainsi obtenir des fils enduits le avec des taux de fibres particulièrement faibles, et en tout cas très inférieurs à 35 %, sans instabilité longitudinale sur le diamètre de leurs gaines métalliques. Ces fils enduits sont obtenus sans dégradation du rendement de fabrication car ils peuvent être produits en conservant une vitesse d'avancement de la fibre élevée, c'est-à-dire proche de la valeur optimale de 3 m/s mise en oeuvre dans l'art antérieur.

Pour obtenir une bonne compacité du dispositif et rester dans l'encombrement des 200 mm, diverses configurations peuvent être imaginées, qui se distinguent du dispositif décrit par le nombre de tubes 13, par l'épaisseur de la fente 16 ou encore par la pression dans le réservoir de gaz comprimé 14.

Enfin, la compacité du dispositif permet d'envisager d'en installer plusieurs en série, sans qu'il en résulte des colonnes de production trop hautes, et ainsi d'obtenir des épaisseurs de gaine métalliques plus élevées, donc des taux de fibres encore plus faibles.

Bien que l'invention ait été décrite en relation avec un mode de réalisation particulier, il est bien évident qu'elle comprend tous les équivalents techniques des moyens décrits ainsi que leurs combinaisons si celles-ci entrent dans le cadre de l'invention.

## Revendications

1. Dispositif d'enduction métallique de fibres par voie liquide, comportant un creuset (2) contenant un bain de métal liquide (3) à travers lequel est tirée une fibre (1) pour être enduite par ce dernier, ledit dispositif comportant en outre un système de refroidissement (11) positionné en aval dudit bain de métal pour solidifier la gaine métallique (9) créée par capillarité autour de ladite fibre
**caractérisé en ce que** ledit système de refroidissement comporte au moins une buse (16) d'éjection d'un gaz comprimé conformée pour éjecter le gaz dans une direction faisant avec la direction d'avancement du fil enduit (1e) un angle inférieur à 30° et positionnée à une distance du bain de métal liquide (3) inférieure à 5 mm, et **en ce que** le système est dimensionné pour solidifier le métal à la périphérie d'un fil enduit (1e) sur une course d'une longueur inférieure ou égale à 200 mm.

2. Dispositif selon la revendication 1 dans lequel le système de refroidissement comporte deux séries de tubes (13) portant chacun au moins une buse (16), placés en face à face, de part et d'autre du fil enduit (1e) à sa sortie du métal liquide (3).

3. Dispositif selon la revendication 2 dans lequel la ou les buses (16) ont la forme d'une fente pratiquée dans le tube (13) s'étendant perpendiculairement à la direction d'avancement du fil enduit (1e).

4. Dispositif selon l'une des revendications 1 à 3 comprenant en outre un galet mobile (6) apte à déplacer la fibre (1) pour qu'elle traverse ou non le bain de métal liquide (3), dans lequel le système de refroidissement (11) est positionné le long du fil enduit (1e), entre ledit bain de métal liquide et ledit galet mobile (6).

5. Dispositif selon la revendication 4 dans lequel le système de refroidissement comporte deux séries de tubes (13) portant chacun au moins une buse (16) d'éjection d'un gaz comprimé, lesdites séries étant positionnées de part et d'autre du fil enduit (1e) à sa sortie du métal liquide (3), le long de deux plans parallèles entre eux et parallèles au fil enduit, de sorte que le fil enduit (1e) puisse se mouvoir entre ces plans, sous l'action dudit galet mobile (6), pour entrer ou sortir dudit bain de métal liquide (3).

6. Procédé de production d'un fil enduit (1e) à un taux de fibres, défini comme le rapport du diamètre de la fibre initiale au diamètre du fil enduit, inférieur à 35%, à partir d'une fibre (1) tirée à travers un bain de métal liquide (3) contenu dans un creuset (2) puis refroidie en aval dudit bain de métal pour solidifier la gaine métallique (9) créée par capillarité autour de ladite fibre,
**caractérisé par le fait qu'**il comprend le passage dudit fil devant une buse (16) d'éjection d'un gaz comprimé conformée pour éjecter le gaz dans une direction faisant avec la direction d'avancement du fil enduit (1e) un angle inférieur à 30° et positionnée à une distance du bain de métal liquide (3) inférieure à 5 mm, la vitesse d'avancement de la fibre (1) étant supérieure à 2 m/s et la pression du gaz comprimé étant supérieure ou égale à 50 bars, de sorte que le métal à la périphérie du fil enduit (1e) est solidifié sur une course d'une longueur inférieure ou égale à 200 mm.

7. Procédé selon la revendication 6 appliqué à la production d'un fil enduit constitué par le passage d'une fibre céramique à travers un bain de titane liquide.

8. Fil enduit, constitué d'une fibre céramique (1) enduite d'une gaine métallique (9), présentant un taux de fibres, défini comme le rapport du diamètre de la fibre initiale au diamètre du fil enduit, inférieur à 35% selon un procédé de production selon l'une des revendications 6 ou 7.

## Patentansprüche

1. Vorrichtung zum metallischen Überziehen von Fasern in einem Flüssigverfahren, umfassend einen ein flüssiges Metall (3) enthaltenden Tiegel (2), durch welchen eine Faser (1) gezogen wird, um durch Letzteres überzogen zu werden, wobei die Vorrichtung des Weiteren ein dem Metallbad nachgelagert positioniertes Kühlungssystem (11) umfasst, um die Metallhülle (9), die durch Kapillarität um die Faser erzeugt wurde, zu verfestigen,
**dadurch gekennzeichnet, dass** das Kühlungssystem mindestens eine Spritzdüse (16) eines komprimierten Gases zum Ausstoßen des Gases in eine Richtung umfasst, die mit der Vorwärtsbewegungsrichtung des überzogenen Fadens (1e) einen Winkel kleiner als 30º bildet und in einem Abstand vom Flüssigmetallbad (3) kleiner als 5 mm positioniert ist, und dadurch, dass das System zum Verfestigen des Metalls am Randbereich eines überzogenen Fadens (1e) über einen Weg einer Länge kleiner als oder gleich 200 mm abgemessen ist.

2. Vorrichtung nach Anspruch 1, wobei das Kühlungssystem zwei Reihen an Rohren (13) umfasst, wovon jedes auf beiden Seiten des überzogenen Fadens (1e) beim Verlassen des Flüssigmetalls (3) einander zugewandt platziert mindestens eine Düse (16) trägt.

3. Vorrichtung nach Anspruch 2, wobei die Düse oder die Düsen (16) die Form eines in dem Rohr (13) angeordneten Schlitzes aufweisen, der sich senkrecht zur Vorwärtsbewegungsrichtung des überzogenen Fadens (1e) erstreckt.

4. Vorrichtung nach einem der Ansprüche 1 bis 3, umfassend des Weiteren eine bewegliche Rolle (6), geeignet zum Versetzen der Faser (1), damit sie das Flüssigmetallbad (3) durchquert oder nicht, wobei das Kühlungssystem (11) entlang des überzogenen Fadens (1e) zwischen dem Flüssigmetallbad und der beweglichen Rolle (6) positioniert ist.

5. Vorrichtung nach Anspruch 4, wobei das Kühlungssystem zwei Reihen an Rohren (13) umfasst, von denen jedes mindestens eine Spritzdüse (16) eines komprimierten Gases trägt, wobei die Reihen auf beiden Seiten des überzogenen Fadens (1e) beim Verlassen des Flüssigmetalls (3) entlang der zwei parallelen Ebenen zwischen ihnen und parallel zum überzogenen Faden, auf eine Weise einander zugewandt positioniert sind, dass der überzogene Faden (1e) sich unter der Wirkung der beweglichen Rolle (6) zwischen den Ebenen bewegen kann, um in das Flüssigmetallbad (3) hinein zu kommen oder hinaus zu kommen.

6. Verfahren zum Herstellen eines überzogenen Fadens (1e) mit einem Anteil an Fasern, definiert als Verhältnis des Durchmessers der Ursprungsfaser zum Durchmesser des überzogenen Fadens,
kleiner als 35 %, ausgehend von einer durch das in einem Tiegel (2) enthaltenen Flüssigmetallbad (3) gezogenen und danach dem Metallbad nachgelagert abgekühlten Faser (1), um die durch Kapillarität um die Faser erzeugte Metallhülle (9) zu verfestigen,
**dadurch gekennzeichnet, dass** sie einen Durchlauf der Faser vor eine Spritzdüse (16) eines komprimierten Gases, ausgelegt zum Ausstoßen des Gases in eine Richtung, die mit der Vorwärtsbewegungsrichtung des überzogenen Fadens (1e) einen Winkel kleiner als 30º bildet und in einem Abstand vom Flüssigmetallbad (3) kleiner als 5 mm positioniert ist, wobei die Vorwärtsbewegungsgeschwindigkeit der Faser (1) größer als 2 m/s ist und der Druck des komprimierten Gases größer oder gleich 50 bar ist, auf eine Weise beinhaltet, dass sich das Metall am Randbereich des überzogenen Fadens (1e) über einen Weg einer Länge kleiner als oder gleich 200 mm verfestigt.

7. Verfahren nach Anspruch 6, angewendet auf die Produktion eines überzogenen Fadens, bestehend aus dem Durchlaufen einer keramischen Faser durch ein Bad aus flüssigem Titan.

8. Überzogener Faden, bestehend aus einer mit einer Metallhülle (9) überzogenen keramischen Faser (1), einen Anteil an Fasern, definiert als das Verhältnis des Durchmessers der Ursprungsfaser zum Durchmesser des überzogenen Fadens, von weniger als 35 % aufweisend, nach einem Verfahren der Produktion nach einem der Ansprüche 6 oder 7.

## Claims

1. Device for metal-coating fibres by liquid means, comprising a sink (2) containing a liquid metal bath (3) through which is pulled a fibre (1) to be coated by the latter, said device further comprising a cooling system (11) positioned downstream of said metal bath to solidify the metal cover (9) created by capillary action around said fibre, **characterised in that** said cooling system comprises at least one nozzle (16) for ejecting a compressed gas conformed to eject gas in a direction making with the drive direction of the coated wire (1e) an angle less than 30° and positioned at a distance from the liquid metal bath (3) of less than 5 mm, and **in that** the system is sized to solidify the metal at the periphery of the coated wire (1e) over a course of a length less than or equal to 200 mm.

2. Device according to claim 1, wherein the cooling system comprises two series of tubes (13) each supporting at least one nozzle (16), placed face-to-face, on either side of the coated wire (1e) at the outlet thereof from the metal liquid (3).

3. Device according to claim 2, wherein the nozzle(s) (16) have the form of a slot made in the tube (13) extending perpendicularly to the drive direction of the coated wire (1e).

4. Device according to one of claims 1 to 3 further comprising a mobile roller (6) capable of moving the fibre (1) such that it crosses (or not) the liquid metal bath (3), wherein the cooling system (11) is positioned along the coated wire (1e), between said liquid metal bath and said mobile roller (6).

5. Device according to claim 4, wherein the cooling system comprises two series of tubes (13), each supporting at least one nozzle (16) for ejecting a compressed gas, said series being positioned on either side of the coated wire (1e) at the outlet thereof from the liquid metal (3), along two planes parallel to each other and parallel to the coated wire, such that the coated wire (1e) can be moved between these planes, under the action of said mobile roller (6), to enter or exit said liquid metal bath (3).

6. Method for producing a coated wire (1e) with a fibre content, defined as the ratio of the diameter of the initial fibre to the diameter of the coated wire, less than 35 %, from a fibre (1) pulled through a liquid metal bath (3) contained in a sink (2) then cooled downstream of said metal bath to solidify the metal cover (9) created by capillary action around said fibre, **characterised in** the fact that it comprises the passage of said wire in front of a nozzle (16) for ejecting a compressed gas conformed to eject the gas in a direction, making with the drive direction of the coated wire (1e) an angle less than 30° and positioned at a distance from the liquid metal bath (3) of less than 5 mm, the drive speed of the fibre (1) being higher than 2 m/s and the compressed gas pressure being higher than or equal to 50 bars, such that the metal at the periphery of the coated wire (1e) is solidified over a course of a length less than or equal to 200 mm.

7. Method according to claim 6 applied to producing a coated wire constituted by the passage of a ceramic fibre through a liquid titanium bath.

8. Coated wire, constituted of a ceramic fibre (1) coated with a metal cover (9), having a fibre content, defined as the ratio of the diameter of the initial fibre to the diameter of the coated wire, less than 35 %, according to a production method according to one of claims 6 or 7.
